# EUROPEAN PATENT APPLICATION

(11) **EP 4 366 374 A1**
(43) Date of publication of application: **08.05.2024**
(21) Application number: 21949733.6
(22) Date of filing: 16.07.2021
(51) Int. Cl.: H04W 36/00

(54) **COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN); YU, Xinlei, Dongguan, Guangdong 523860 (CN)
(74) Representative: Novagraaf Technologies
(86) International application number: PCT/CN2021/106883
(87) International publication number: WO 2023/283950

(57) **Abstract**

Provided in the present application are a communication method and an apparatus. The method comprises: a terminal device first receives configuration information sent by a network device, said configuration information comprising first time information; and the terminal device subsequently executes a first operation according to the first time information. By the present means, when performing an operation on a secondary cell, a terminal device can execute a first operation according to first time information, signaling overhead between the terminal device and a network device is reduced, and an excessively long delay is prevented.

## Description

### TECHNICAL FIELD

The present disclosure relates to the field of communication technologies, and in particular to a communication method and an apparatus.

### BACKGROUND

Carrier Aggregation (CA), i.e., by jointly scheduling and using resources on a plurality of Component Carriers (CCs), enables a New Radio (NR) system to support greater bandwidth, so as to achieve higher peak rate of the system. A future Non Terrestrial Network (NTN) scenario may support CA technology, that is, a terminal device may use a plurality of satellite cells for performing CA. Secondary Cell (SCell) management in the NTN scenario is a problem that needs to be addressed.

The SCell management may include operations such as adding, modifying, deleting, activating, and deactivating. The above-mentioned operations generally require separate Radio Resource Control (RRC) dedicated signalling to be completed, for example, an RRC reconfiguration message. After a network device transmits the RRC reconfiguration message, a response completion message is needed to be fed back by the terminal device. Thus, the above-mentioned operations are completed.

However, in the NTN scenario, when the Low-Earth Orbit (LEO) satellite moves at a high speed, there is also a switching for a connection between the satellite and the terrestrial gateway. If two terrestrial gateways are connected to two terrestrial base stations or two cells of one terrestrial base station, then all terminal devices in an area covered by the satellite need to switch from an original cell to a new cell after feeder link switch. For SCell configuration adjustment caused by the feeder link switch, frequent RRC reconfiguration messages are required between the terminal device and the network device, resulting in increasing signaling overhead. In addition, delay for performing an operation on the SCell becomes long due to long Round Trip Time (RTT) in an NTN network.

### SUMMARY OF THE DISCLOSURE

The embodiments of the present disclosure provide a communication method and an apparatus to solve the problem that delay for performing an operation on a SCell becomes too long in the related art.

In a first aspect, the present disclosure provides a communication method, including: receiving, by a terminal device, configuration information transmitted by a network device, wherein the configuration information comprises first time information; performing, by the terminal device, a first operation according to the first time information.

In some embodiments, the first operation is an operation performed on a secondary cell in response to feeder link switch occurring.

In some embodiments, the first time information includes at least one of: a Coordinated Universal Time, a timeout moment of the timer corresponding to the secondary cell, and a system frame number.

In some embodiments, the performing, by the terminal device, a first operation according to the first time information, includes: performing, by the terminal device, the first operation on the secondary cell in response to the Coordinated Universal Time being reached.

In some embodiments, the timer corresponding to the secondary cell is started in response to the terminal device receiving the configuration information, and stopped in response to the timeout moment in the configuration information being reached.

In some embodiments, the performing, by the terminal device, a first operation according to the first time information, includes: performing, by the terminal device, the first operation in response to the timer corresponding to the secondary cell timing out.

In some embodiments, the system frame number is one received on a primary cell or received on a special secondary cell.

In some embodiments, the method further includes: receiving, by the terminal device, indication information transmitted by the network device, where the indication information is configured to indicate that the system frame number is received on the primary cell, or indicate an identifier of the secondary cell receiving the system frame number.

In some embodiments, the performing, by the terminal device, a first operation according to the first time information, includes: performing, by the terminal device, the first operation in response to a received system frame number being equal to the system frame number in the configuration information.

In some embodiments, the first operation includes adding the secondary cell or deleting the secondary cell.

In some embodiments, the first operation includes activating the secondary cell or deactivating the secondary cell.

In some embodiments, the activating the secondary cell includes at least one of: monitoring a physical downlink control channel on the secondary cell, transmitting a channel detection reference signal, a physical uplink shared channel, or a physical uplink control channel on the secondary cell, and performing a channel state information measurement and a beam management on the secondary cell.

In some embodiments, the deactivating the secondary cell includes at least one of: stopping monitoring a physical downlink control channel on the secondary cell, stopping transmitting a channel detection reference signal, a physical uplink shared channel, or a physical uplink control channel on the secondary cell, and stopping performing a channel state information measurement and a beam management on the secondary cell.

In a second aspect, the present disclosure provides a communication method, including: determining, by a network device, configuration information, wherein the configuration information includes first time information, and a first time is a time for which a terminal device performs a first operation on a secondary cell; transmitting, by the network device, the configuration information to the terminal device.

In some embodiments, the first operation is an operation performed on the secondary cell in response to feeder link switch occurring.

In some embodiments, the first time information includes at least one of: a Coordinated Universal Time, a timeout moment of the timer corresponding to the secondary cell, and a system frame number.

In some embodiments, the timer corresponding to the secondary cell is started in response to the terminal device receiving the configuration information, and stopped in response to the timeout moment in the configuration information being reached.

In some embodiments, the system frame number is one received on a primary cell or received on a special secondary cell.

In some embodiments, the method further includes: transmitting, by the network device, indication information to the terminal device, where the indication information is configured to indicate that the system frame number is received on the primary cell, or indicate an identifier of the secondary cell receiving the system frame number.

In some embodiments, the first operation includes adding the secondary cell or deleting the secondary cell.

In some embodiments, the first operation includes activating the secondary cell or deactivating the secondary cell.

In some embodiments, the activating the secondary cell includes at least one of: monitoring a physical downlink control channel on the secondary cell, transmitting a channel detection reference signal, a physical uplink shared channel, or a physical uplink control channel on the secondary cell, and performing a channel state information measurement and a beam management on the secondary cell.

In some embodiments, the deactivating the secondary cell includes at least one of: stopping monitoring a physical downlink control channel on the secondary cell, stopping transmitting a channel detection reference signal, a physical uplink shared channel, or a physical uplink control channel on the secondary cell, and stopping performing a channel state information measurement and a beam management on the secondary cell.

In a third aspect, the present disclosure provides a communication apparatus, including: a receiving module, configured to receive configuration information transmitted by a network device, where the configuration information includes first time information; a processing module, configured to perform a first operation according to the first time information.

In some embodiments, the first operation is an operation performed on the secondary cell in response to feeder link switch occurring.

In some embodiments, the first time information includes at least one of: a Coordinated Universal Time, a timeout moment of the timer corresponding to the secondary cell, and a system frame number.

In some embodiments, the processing module is configured to perform the first operation on the secondary cell in response to the Coordinated Universal Time being reached.

In some embodiments, the timer corresponding to the secondary cell is started in response to the terminal device receiving the configuration information, and stopped in response to the timeout moment in the configuration information being reached.

In some embodiments, the processing module is configured to perform the first operation by the communication device in response to the timer corresponding to the secondary cell timing out.

In some embodiments, the system frame number is one received on a primary cell or received on a special secondary cell.

In some embodiments, the receiving module is further configured to receive the indication information transmitted by the network device, and the indication information is configured to indicate that the system frame number is received on the primary cell, or indicate an identifier of the secondary cell receiving the system frame number.

In some embodiments, the processing module is configured to perform the first operation in response to a received system frame number being equal to the system frame number in the configuration information.

In some embodiments, the first operation includes adding the secondary cell or deleting the secondary cell.

In some embodiments, the first operation includes activating the secondary cell or deactivating the secondary cell.

In some embodiments, the activating the secondary cell includes at least one of: monitoring a physical downlink control channel on the secondary cell, transmitting a channel detection reference signal, a physical uplink shared channel, or a physical uplink control channel on the secondary cell, and performing a channel state information measurement and a beam management on the secondary cell.

In some embodiments, the deactivating the secondary cell includes at least one of: stopping monitoring a physical downlink control channel on the secondary cell, stopping transmitting a channel detection reference signal, a physical uplink shared channel, or a physical uplink control channel on the secondary cell, and stopping performing a channel state information measurement and a beam management on the secondary cell.

In a fourth aspect, the present disclosure provides a communication apparatus, including: a processing module, configured to determine configuration information, wherein the configuration information includes first time information, and a first time is a time for which a terminal device performs a first operation on a secondary cell; a transmission module, configured to transmit the configuration information to the terminal device.

In some embodiments, the first operation is an operation performed on the secondary cell in response to feeder link switch occurring.

In some embodiments, the first time information includes at least one of: a Coordinated Universal Time, a timeout moment of the timer corresponding to the secondary cell, and a system frame number.

In some embodiments, the timer corresponding to the secondary cell is started in response to the terminal device receiving the configuration information, and stopped in response to the timeout moment in the configuration information being reached.

In some embodiments, the system frame number is one received on a primary cell or received on a special secondary cell.

In some embodiments, the transmission module is further configured to transmit indication information to the terminal device, and the indication information is configured to indicate that the system frame number is received on the primary cell, or indicate an identifier of the secondary cell receiving the system frame number.

In some embodiments, the first operation includes adding the secondary cell or deleting the secondary cell.

In some embodiments, the first operation includes activating the secondary cell or deactivating the secondary cell.

In some embodiments, the activating the secondary cell includes at least one of: monitoring a physical downlink control channel on the secondary cell, transmitting a channel detection reference signal, a physical uplink shared channel, or a physical uplink control channel on the secondary cell, and performing a channel state information measurement and a beam management on the secondary cell.

In some embodiments, the deactivating the secondary cell includes at least one of: stopping monitoring a physical downlink control channel on the secondary cell, stopping transmitting a channel detection reference signal, a physical uplink shared channel, or a physical uplink control channel on the secondary cell, and stopping performing a channel state information measurement and a beam management on the secondary cell.

In a fifth aspect, the present disclosure provides a terminal device, including: a processor and a memory; where the memory is configured to store an executable instruction of the processor, and the processor is configured to perform the method as described in the first aspect.

In a sixth aspect, the present disclosure provides a network device, including: a memory and a processor; where the memory is configured to store an executable instruction of the processor, and the processor is configured to perform the method as described in the second aspect.

In a seventh aspect, the present disclosure provides a chip, including: a processor, call and run a computer program from a memory to cause a device arranged with the chip to perform the method as described in the first aspect.

In an eighth aspect, the present disclosure provides a chip, including: a processor, call and run a computer program from a memory to cause a device arranged with the chip to perform the method as described in the second aspect.

In a ninth aspect, the present disclosure provides a computer-readable storage medium, storing a computer program which causes a computer to perform the method as described in the first aspect.

In a tenth aspect, the present disclosure provides a computer-readable storage medium, storing a computer program which causes a computer to perform the method as described in the second aspect.

In an eleventh aspect, the present disclosure provides a computer program product, including computer program instructions which cause a computer to perform the method as described in the first aspect.

In a twelfth aspect, the present disclosure provides a computer program product, including computer program instructions which cause a computer to perform the method as described in the first aspect.

In a thirteenth aspect, the present disclosure provides a computer program, causing a computer to perform the method as described in the first aspect.

In a fourteenth aspect, the present disclosure provides a device, may including at least one processor and an interface circuit. involved program instructions are executed in the at least one processor, so as to cause a communication device to perform the method described in the first aspect.

In a fifteenth aspect, the present disclosure provides a device, may including at least one processor and an interface circuit. Involved program instructions are executed in the at least one processor, so as to cause a communication device to perform the method described in the second aspect.

In a sixteenth aspect, the present disclosure provides a communication system, including the communication apparatus as described in the third aspect and the communication apparatus as described in the fourth aspect.

In a seventeenth aspect, the present disclosure provides a communication device, configured to perform the method described in the first aspect.

In an eighteenth aspect, the present disclosure provides a communication device, configured to perform the method described in the second aspect.

In the communication method and device provided by some embodiments of the present disclosure, the terminal device firstly receives the configuration information transmitted by the network device, and the configuration information includes the first time information. Then, the terminal device performs a first operation according to the first time information. In this way, when performing an operation on the secondary cell, the terminal device may perform the first operation according to the first time information, thereby reducing the signaling overhead between the terminal device and the network device and reducing long delay.

### BRIEF DESCRIPTION OF THE DRAWINGS

To illustrate the technical solutions more clearly in the embodiments of the present disclosure or in the related art, the following will be briefly described in the description of the embodiments or in the related art required to use the attached drawings. It is obvious that the following description of the attached drawings are only some of the embodiments of the present disclosure. and those skilled in the art, without creative work, may also obtain other attached drawings based on these drawings.
FIG. 1 is a schematic diagram of a transparent payload satellite network architecture according to some embodiments of the present disclosure.
FIG. 2 is a schematic diagram of a regenerative payload satellite network architecture according to some embodiments of the present disclosure.
FIGS. 3a-3b are schematic diagrams of feeder link switch according to some embodiments of the present disclosure.
FIG. 4 is a scenario schematic diagram of a communication method according to some embodiments of the present disclosure.
FIG. 5 is a signaling interaction schematic diagram of a communication method according to some embodiments of the present disclosure.
FIG. 6 is a signaling interaction schematic diagram of another communication method according to some embodiments of the present disclosure.
FIG. 7 is a schematic diagram of adding or deleting a secondary cell according to some embodiments of the present disclosure.
FIG. 8 is a signaling interaction schematic diagram of yet another communication method according to some embodiments of the present disclosure.
FIG. 9 is a schematic diagram of activating or deactivating a secondary cell according to some embodiments of the present disclosure.
FIG. 10 is a structural schematic diagram of a communication apparatus according to some embodiments of the present disclosure.
FIG. 11 is a structural schematic diagram of another communication apparatus according to some embodiments of the present disclosure.
FIG. 12 is a structural schematic diagram of an electronic device according to some embodiments of the present disclosure.

### DETAILED DESCRIPTION

In order to make the purpose, technical solutions and advantages of the embodiments of the present disclosure clearer, the technical solutions in the embodiments of the present disclosure will be described clearly and completely below in conjunction with the accompanying drawings in the embodiments of the present disclosure, and it is clear that the embodiments described are a part of the embodiments of the present disclosure and not all of them. Based on the embodiments in the present disclosure, all other embodiments obtained by those skilled in the art without making creative labor fall within the scope of the present disclosure.

The terms "first", "second", etc. in the specification, claims and the drawings of the embodiments of the present disclosure are intended to distinguish similar objects and need not be used to describe a particular order or sequence. It should be understood that the terms so described may be interchanged, where appropriate, such that the embodiments of the present disclosure described herein may be implemented, for example, in an order other than those illustrated or described herein. Further, the terms "including" and "having", and any variations thereof, are intended to cover non-exclusive inclusion, e.g., a process, method, system, product, or apparatus including a series of steps or units need not be limited to those steps or units clearly listed, but may include those that are not clearly listed. units, but may include other steps or units not clearly listed or inherent to the process, method, product, or, apparatus.

It should be understood that the terms "system" and "network" may be used interchangeably in this document. The term "and/or" is only a description of an association relationship of associated objects, indicating that three relationships may exist, for example, A and/or B, which may indicate: the existence of A alone, the existence of both A and B, and the existence of B alone. In addition, the character "j" generally indicates that the front and rear associated objects are in an "or" relationship.

The technical solutions in the embodiments of the present disclosure will be described below in conjunction with the accompanying drawings in the embodiments of the present disclosure, and it is clear that the embodiments described are a part of the embodiments of the present disclosure, and not all of them. For the embodiments in the present disclosure, all other embodiments obtained by those skilled in the art without making creative labor fall within the scope of the present disclosure.

Firstly, NTN technology is described below.

Currently, the 3rd Generation Partnership Project (3GPP) is researching the NTN technology. NTN generally provides communication services to terrestrial users through satellite communication. Compared with terrestrial cellular network communication, satellite communication has many unique advantages. firstly, satellite communication is not limited by the user's geographical location. For example, general terrestrial communication cannot cover areas such as oceans, mountains, deserts, etc. where communication device cannot be set up or where communication coverage is not done due to sparse population, while for satellite communication, a single satellite may cover a large area of the terrestrial, and since satellites may orbit around the earth, theoretically every corner of the earth may be covered by satellite communication. Secondly, satellite communication has greater social value. Satellite communication may cover remote mountainous areas, poor and backward countries or regions at a lower cost, such that people in these regions may enjoy advanced voice communication and mobile Internet technology, which is conducive to narrowing the digital divide with developed regions and promoting the development of these regions. In addition, the communication distance of satellite communication is long, and the cost of communication does not increase significantly. Moreover, the stability of satellite communication is high and not subject to natural disasters.

Currently, communication satellites in the NTN technology are divided into a low-earth orbit (LEO) satellite, a medium-earth orbit (MEO) satellite, a geostationary earth orbit (GEO) satellite, and a high elliptical orbit (HEO) satellite, etc. according to their orbital altitude. LEO and GEO are mainly studied.

For LEO satellites, the orbital altitude range is 500km-1500km, and the corresponding orbital period is about 1.5 hours-2 hours. The signal propagation delay of single-hop communication between terminals is generally less than 20ms. The maximum satellite visualization time is 20 minutes. The signal propagation distance is short, the link loss is low, and the transmitting power requirement for the terminal is not high.

For GEO satellites, the orbit altitude is 35786km and the rotation period around the earth is 24 hours. The signal propagation delay for single-hop communication between users is typically 250ms.

In order to ensure satellite coverage and enhance the system capacity of the entire satellite communication system, satellites use multiple beams to cover the terrestrial, and a satellite may form dozens or even hundreds of beams to cover the terrestrial; a satellite beam may cover a terrestrial area of dozens to hundreds of kilometers in diameter.

Two satellite network architectures in the NTN technology are provided below.

Currently, there are two types of satellites considered in the 3GPP, one is a transparent payload satellite, and the other is a regenerative payload satellite. The transparent payload satellite does not perform any processing on a received signal except for amplification and frequency conversion, but simply completes a forwarding task. Therefore, the transparent payload satellite is "transparent" to any signals. The regenerative payload satellite not only performs signal forwarding, but also has a signal processing function.

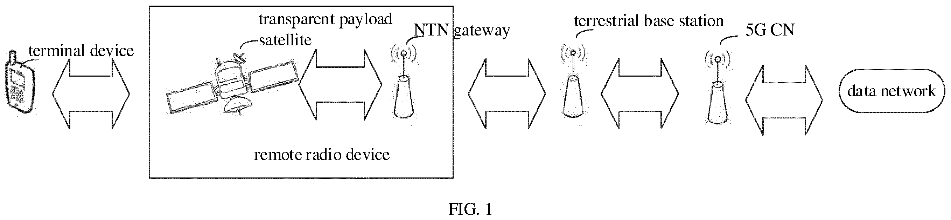

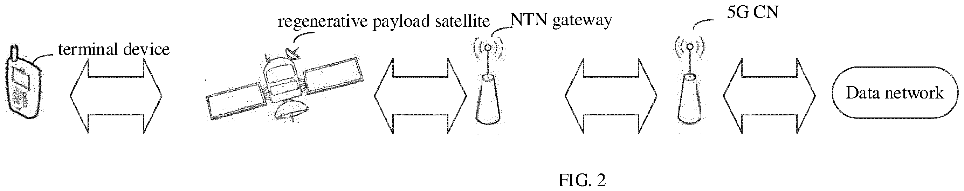

FIG. 1 is a schematic diagram of a transparent payload satellite network architecture according to some embodiments of the present disclosure. As shown in FIG. 1, in the transparent payload satellite network architecture, a transparent payload satellite and an NTN gateway (located on the terrestrial) form a remote radio device. The remote radio device is connected to a terminal device and a terrestrial base station, respectively, and then the terrestrial base station accesses a data network through a 5G core network (CN). FIG. 2 is a schematic diagram of a regenerative payload satellite network architecture according to some embodiments of the present disclosure. As shown in FIG. 2, the regenerative payload satellite is connected to the terminal device and the NTN gateway, respectively, and then the NTN gateway accesses the data network through the 5G CN.

A radio link between the satellite and the NTN gateway is a feeder link.

Feeder link switch is described below.

In a case that two terrestrial gateways are connected to two terrestrial base stations (i.e., a complete terrestrial base station, or a Central Unit (CU)), or two cells of one terrestrial base station, all terminal devices in an area covered by the satellite need to switch from an original cell to a new cell after the feeder link switch. In a case that two terrestrial gateways are connected to the same cell of the same terrestrial base station, the terminal device does not need to perform switching operation in theory.

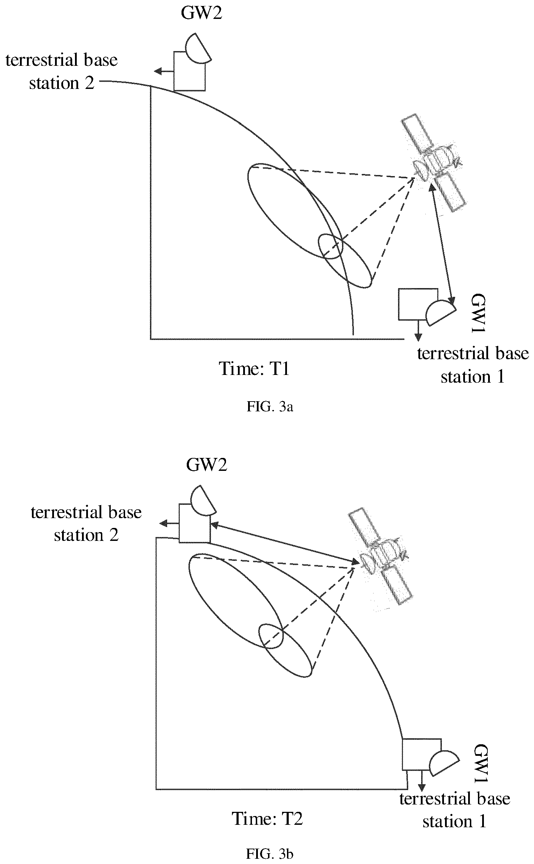

Exemplary, FIGS. 3a-3b are schematic diagrams of feeder link switch according to some embodiments of the present disclosure. As shown in FIG. 3a and FIG. 3b, at a time-point T1, the satellite is located at a position shown in FIG. 3a and connected to a cell of a terrestrial base station 1 through a terrestrial gateway GW1. At a time-point T2, as the satellite moves, the satellite is located at a position shown in FIG. 3b and connected to a cell of a terrestrial base station 2 through a terrestrial gateway GW2. At this time, the satellite needs to perform feeder link switch.

It should be noted that the current standard supports two types of feeder link switch, and the two types of feeder link switch includes soft switch and hard switch. The soft switch corresponds to a case that the time-point T2 at which a new feeder link is connected is earlier than the time-point T1 at which an old feeder link is disconnected. The Hard switch corresponds to a scenario where the time-point T2 is later than the time-point T1.

CA technology is described below.

In order to provide a larger data transmission rate and improve the user experience, the 5G NR further increases the system bandwidth on the basis of 4G. In the 5G NR, a maximum bandwidth supported by a single carrier is 100 MHz for a band below 6 GHz; and a maximum bandwidth supported by a single carrier is 400 MHz for a band above 6 GHz. Similar to the LTE system, the CA technology is also supported in 5G NR.

CA, i.e., by jointly scheduling and using resources on the plurality of CCs, enables the NR system may support greater bandwidth, so as to achieve higher peak rate of the system. According to the continuity of aggregated carriers in the spectrum, the CA may be divided into continuous CA and discontinuous CA. Based on whether the frequency band of the aggregated carriers is the same, the CA may be divided into Intra-band CA and inter-band CA.

In a Cell Group, there is only one Primary Cell Component (PCC), and the PCC provides functions such as RRC signaling connection, Network Attached Storage (NAS), and network security. Secondary Cell Component (SCC) provides an additional radio resource. The PCC and the SCC are referred to as service cells, the PCC corresponds to the Primary Cell (PCell), and the SCC corresponds to the Secondary Cell (SCell). For a terminal device supporting CA features, in addition to a case that the terminal device has one PCell, the network RRC may also configure one or more SCells for the terminal device. The standard also stipulates that the aggregated carriers belong to the same base station. All aggregated carriers use the same Cell Radio Network Temporary Identifier (C-RNTI), and thus the base station ensures that the C-RNTI does not conflict in the cell where each carrier is located. Since asymmetric carrier aggregation and symmetric carrier aggregation are supported, a carrier required to be aggregated must have downlink and may not have uplink.

The SCell has two states: an active state and an inactive state. Only when the SCell is in the active state, the terminal device may transmit and receive data on the SCell. The network device configures the SCell through RRC dedicated signaling, and an initially-configured state of the network may be explicitly indicated. A default state is a deactivated state in which data transmission cannot be carried out. The network device may receive and transmit data only after activating the SCell through Media Access Control (MAC CE). Alternatively, the network device may deactivate the SCell through the MAC CE.

A future NTN scenario may support the CA technology, that is, the terminal device may use the plurality of satellite cells for performing CA. SCell management in the NTN scenarios is a problem that needs to be addressed. The SCell management may include operations such as adding, modifying, deleting, activating, and deactivating. The above-mentioned operations generally require separate Radio Resource Control (RRC) dedicated signalling to be completed, for example, an RRC reconfiguration message. After a network device transmits the RRC reconfiguration message, a response completion message is needed to be fed back by the terminal device. Thus, the above-mentioned operations are completed.

However, in the NTN scenario, when the Low Earth Orbit (LEO) satellite moves at a high speed, there is also a switching for a connection between the satellite and the terrestrial gateway. For SCell configuration adjustment caused by the feeder link switch, frequent RRC reconfiguration messages are required between the terminal device and the network device, resulting in an increase in signaling overhead. In addition, delay for performing an operation on the SCell becomes long due to long Round Trip Time (RTT) in an NTN network.

To solve the above technical problem, a communication method and apparatus are provided by some embodiments of the present disclosure. A network device may configure a first operation performed by a terminal device on a secondary cell by transmitting configuration information carrying first time information to the terminal device. In this way, when operating the secondary cell, the terminal device may perform the first operation according to the first time information, thereby reducing signaling overhead between the terminal device and the network device, and reducing long delay.

Application scenarios of the present disclosure are illustrated below.

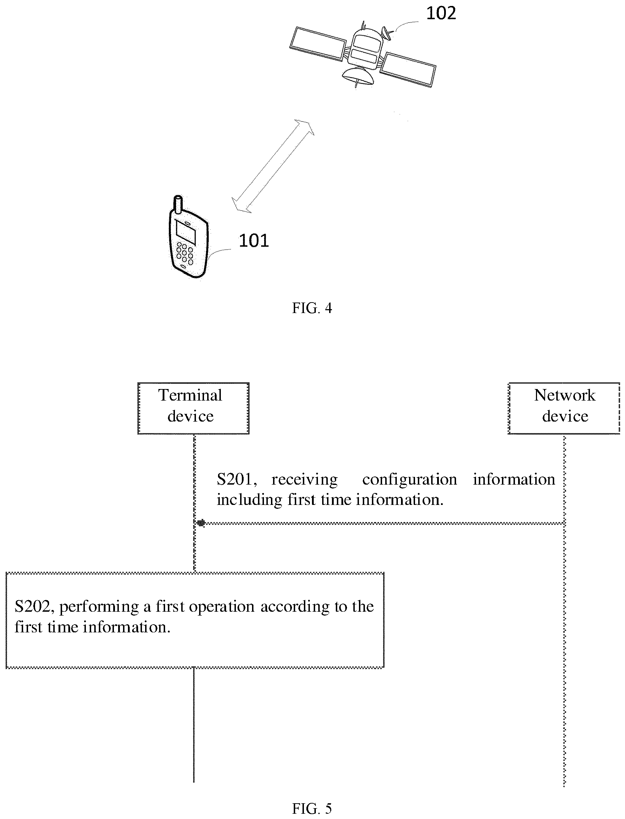

FIG. 4 is a scenario schematic diagram of a communication method according to some embodiments of the present disclosure. As shown in FIG. 4, a network device 102 transmits configuration information to a terminal device 101. The configuration information includes first time information. After receiving the configuration information, the terminal device 101 may perform a first operation on a secondary cell according to the first time information.

In some embodiments, the first operation may include adding a secondary cell, deleting a secondary cell, activating a secondary cell, deactivating a secondary cell, etc., which is not limited herein.

The terminal device 101 may include, but is not limited to, satellite or cellular phones; Personal Communications System (PCS) terminals that can combine cellular radio phones with data processing, fax, and data communication capabilities; a PDA that can include a radio phone, a pager, Internet/intranet access, a Web browser, a memo pad, a calendar, and/or a Global Positioning System (GPS) receiver; and a conventional laptop and/or palmtop receiver or other devices including radio telephone transceivers. The terminal device may refer to an access terminal, a user equipment (UE), a user unit, a user station, a mobile station, a mobile platform, a remote station, a remote terminal, a mobile device, a user terminal, a terminal, a wireless communication device, a user agent or a user apparatus. The access terminal may be a cellular phone, a cordless phone, a Session Initiation Protocol (SIP) phone, a wireless local loop (WLL) station, a personal digital assistant (PDA), a handheld device having wireless communication functions, a computing device or other processing devices connected to a wireless modem, a vehicle-mounted device, a wearable device, a terminal device in the 5G network, or a terminal device in the future evolutional PLMN, and so on.

The network device 102 may provide communication coverage for a specific geographic area and may communicate with terminal devices located within the coverage area. In some embodiments, the network device 102 may be, but is not limited to, a satellite in the NTN system. In some embodiments, the network device 102 may be a Base Transceiver Station (BTS) in the GSM system or the CDMA system, a base station (NodeB, NB) in the WCDMA system, an Evolutional Node B (eNB or eNodeB) in the LTE system, or a radio controller in a Cloud Radio Access Network (CRAN). In some embodiments, the network device may be a mobile switching center, a relay station, an access point, a vehicle-mounted device, a wearable device, a hub, a switcher, a bridge, a router, a network device in the 5G network, or a network device in a future evolutional public land mobile network (PLMN), and so on

Taking the terminal device and the network device as examples, the technical solutions of some embodiments of the present disclosure will be described in detail in conjunction with the embodiments. The following embodiments may be combined with each other, and the same or similar concepts or processes may not be repeated in some embodiments.

FIG. 5 is a signaling interaction schematic diagram of a communication method according to some embodiments of the present disclosure. The embodiments of the present disclosure relate to a process how the terminal device determines to perform the first operation on the secondary cell. As shown in FIG. 5, the method includes the following operations.

At block S201, the network device transmits configuration information to the terminal device, and the configuration information includes first time information.

In some embodiments of the present disclosure, the network device may transmit the first time information to the terminal device in advance to configure an execution time of the first operation. Then, the terminal device may perform the first operation after time indicated in the first time information in the configuration information reaches.

It should be noted that the first operation in some embodiments of the present disclosure may be an operation performed on the secondary cell when feeder link switch occurs, or an operation performed on the secondary cell in other cases, which is not limited herein. A type of the first operation is not limited herein. In some embodiments, the first operation may include adding the secondary cell or deleting the secondary cell. In some embodiments, the first operation may include activating the secondary cell or deactivating the secondary cell.

Accordingly, if the first operation includes adding the secondary cell or deleting the secondary cell, the configuration information may be carried in a radio resource control (RRC) signaling, such as an RRC reconfiguration message.

Accordingly, if the first operation includes activating the secondary cell or deactivating the secondary cell, the configuration information may be carried in the RRC signaling (for example, the RRC reconfiguration message), a MAC CE (for example, an enhanced SCell activation or deactivation MAC CE), or a Physical Downlink Control Channel (PDCCH).

The activating the secondary cell may include at least one of the following: monitoring the PDCCH on the secondary cell, transmitting a channel detection reference signal, a physical uplink shared channel, or a physical uplink control channel on the secondary cell, and performing a channel state information measurement and a beam management on the secondary cell.

The deactivating the secondary cell may include at least one of the following: stopping monitoring the PDCCH on the secondary cell, stopping transmitting the channel detection reference signal, the physical uplink shared channel, or the physical uplink control channel on the secondary cell, and stopping performing the channel state information measurement and the beam management on the secondary cell.

In addition, the configuration information may only configure the first operation for one secondary cell, or configure the first operation for a plurality of secondary cells at the same time, which is not limited herein.

In some embodiments, the configuration information may not only configure an identifier of the secondary cell on which the first operation is to be performed, but also configure the first time information of the first operation. The first time information is configured for a respective secondary cell to be performed on.

It should be understood that a type of the first time information of the first operation is not limited herein. In some embodiments, the first time information of the first operation may include at least one of the following: Coordinated Universal Time (UTC), a timeout moment of a timer corresponding to the secondary cell, and a system frame number.

At block S202, the terminal device performs the first operation according to the first time information of the first operation.

After the terminal device receives the configuration information transmitted by the network device, the terminal device may perform the first operation according to the first time information.

It should be understood that how to perform the first operation according to the first time information is not limited herein, which may be arranged based on actual situations.

In some embodiments, if the first time information is the CUT, the terminal device may perform the first operation on the secondary cell when the UTC is reached.

In some embodiments, if the first time information is the timeout moment of the timer corresponding to the secondary cell, the timer corresponding to the secondary cell is started when the terminal device receives the configuration information, and stopped when the timeout moment in the configuration information is reached. When the timer corresponding to the secondary cell times out and stops, the terminal device performs the first operation on the secondary cell.

In some embodiments, if the first time information is the system frame number, the system frame number is one received on a primary cell or received on a special secondary cell. Then, the network device may transmit an indication information to the terminal device. The indication information is configured to indicate that the system frame number is received on the primary cell, or indicate an identifier of a secondary cell receiving the system frame number. The terminal device performs the first operation when a received system frame number is equal to a system frame number in the configuration information.

The special secondary cell may be any secondary cell configured by the network device for the terminal device.

It should be noted that, if the configuration information does not include the first time information, the terminal device may determine the first time information as 0. That is, the terminal device immediately performs the first operation on the secondary cell when receiving the configuration information.

In the communication method provided by some embodiments of the present disclosure, the terminal device firstly receives the configuration information transmitted by the network device, and the configuration information includes the first time information. Then, the terminal device performs a first operation according to the first time information. In this way, when performing an operation on the secondary cell, the terminal device may perform the first operation according to the first time information, thereby reducing the signaling overhead between the terminal device and the network device and reducing long delay.

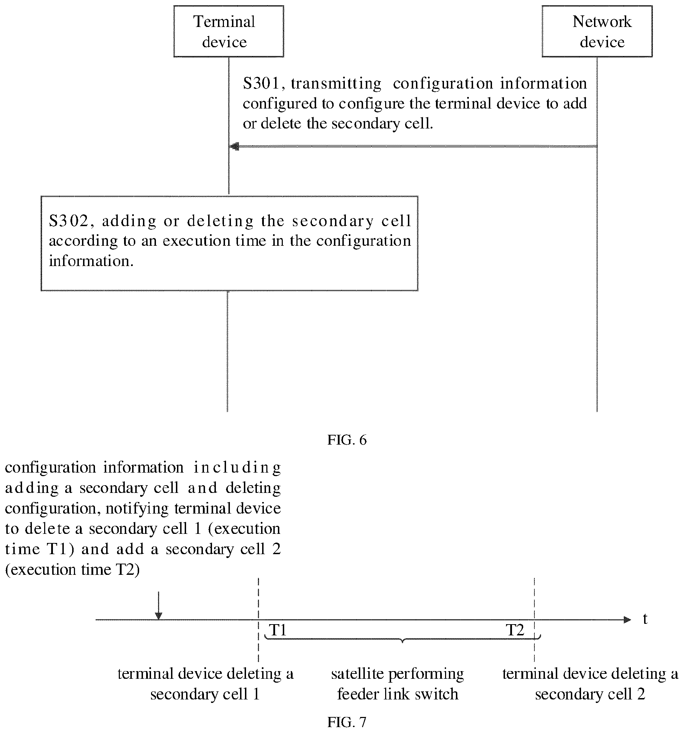

Based on the above-mentioned embodiments, a performing mode of the terminal device will be described below when the first operation is adding the secondary cell or deleting the secondary cell. FIG. 6 is a signaling interaction schematic diagram of another communication method according to some embodiments of the present disclosure. As shown in FIG. 6, the method includes the following operations.

At block S301, a network device transmits configuration information to the terminal device, and the configuration information is configured to configure the terminal device to add the secondary cell or delete the secondary cell.

The configuration information is carried in the RRC signaling, such as the RRC reconfiguration message.

In some embodiments, for an added secondary cell, an execution time for adding the secondary cell may be additionally configured in the configuration information. The execution time may be configured for a respective secondary cell to be added.

In some embodiments, for a deleted secondary cell, the configuration information includes an identifier of the secondary cell to be deleted, and an execution time for deleting the secondary cell may be additionally configured in the configuration information. The execution time may be configured for a respective secondary cell to be deleted.

An arrangement way of the execution time is not limited herein. In some embodiments, the execution time may include at least one of the following: the UTC, the timeout moment of the timer corresponding to the secondary cell, and the system frame number.

The timer corresponding to the secondary cell is started when the terminal device receives the configuration information, and stopped when the timeout moment in the configuration information is reached. The system frame number is the one received on the primary cell or received on a special secondary cell.

At block S302, the terminal device adds the secondary cell or delete the secondary cell according to the execution time in the configuration information.

In some embodiments, if the secondary cell to be added is configured with a relevant execution time, and the execution time of the secondary cell to be added is met in the terminal device, the terminal device may add the secondary cell. If the secondary cell to be added is not configured with the relevant execution time, the terminal device may add the secondary cell immediately when receiving the configuration information.

In some embodiments, if the secondary cell to be deleted is configured with a relevant execution time, and the execution time of the secondary cell to be deleted is met in the terminal device, the terminal device may delete the secondary cell. If the secondary cell to be deleted is not configured with the relevant execution time, the terminal device may delete the secondary cell immediately when receiving the configuration information.

How the execution time is met in the terminal device is not limited herein. In some embodiments, if the execution time is the UTC, the terminal device may add the secondary cell or delete the secondary cell when the UTC is reached. In some embodiments, if the execution time is the timeout moment of the timer corresponding to the secondary cell, the secondary cell is added or deleted when the timer corresponding to the secondary cell times out. In some embodiments, if the execution time is the system frame number, the terminal device performs the first operation when the received system frame number is equal to the system frame number in the configuration information.

The timer corresponding to the secondary cell is started when the terminal device receives the configuration information, and stopped when the timeout moment in the configuration information is reached. The system frame number is the one received on the primary cell or received on the special secondary cell.

In some embodiments of the present disclosure, when an aggregated secondary cell is an NTN cell, the feeder link switch may occur on a satellite where the NTN cell is located. FIG. 7 is a schematic diagram of adding or deleting the secondary cell according to some embodiments of the present disclosure. As shown in FIG. 7, for the hard switch, the satellite belongs to the secondary cell 1 before the time-point T1, and the satellite belongs to the secondary cell 2 after the time-point T2. The time-point T1 and the time-point T2 are configured to the terminal device, and the terminal device may delete the secondary cell 1 at the time-point T1. At this time, the network stops scheduling the terminal device on the secondary cell 1 from the time-point T1. The terminal device adds the secondary cell 2 at the time-point T2. The network device may schedule the secondary cell on the secondary cell 2 from the time-point T2. The network device may configure the time-point T1/T2 and the information of the secondary cell 1/secondary cell 2 for the terminal device in advance, and the RRC reconfiguration message and an RRC reconfiguration completion message of the secondary cell may be saved, thereby reducing signaling overhead. In addition, it may be possible to reduce effective delay of configuring the secondary cell, thereby improving transmission efficiency and transmission rate.

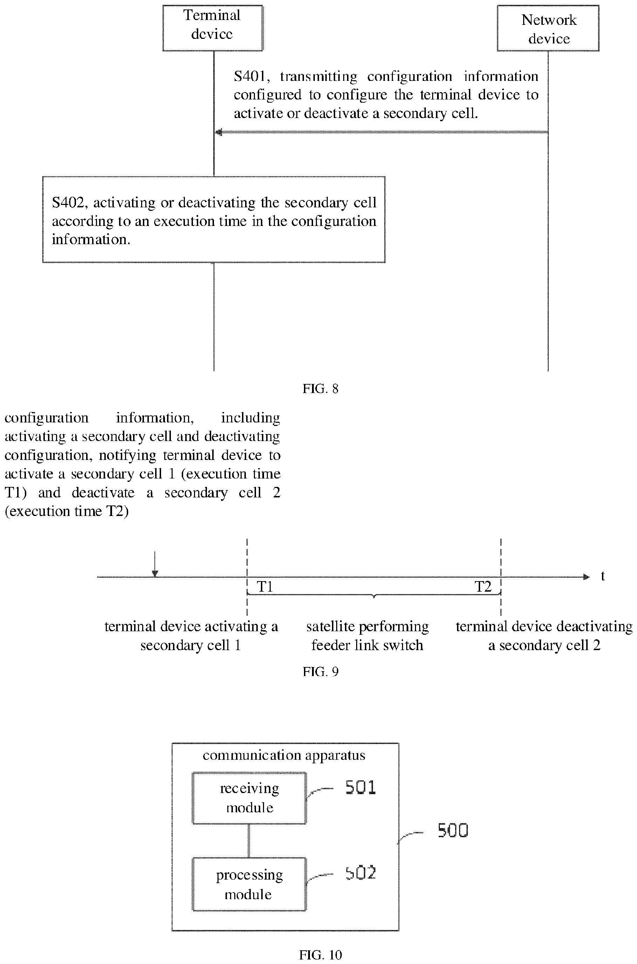

Based on the above-mentioned embodiments, a performing mode of the terminal device when the first operation is activating the secondary cell or deactivating the secondary cell will be described below. FIG. 8 is a signaling interaction schematic diagram of yet another communication method according to some embodiments of the present disclosure. As shown in FIG. 8, the method includes the following operations.

At block S401, the network device transmits the configuration information to the terminal device, and the configuration information is configured to configure the terminal device to activate or deactivate the secondary cell.

A mode of carrying the configuration information is not limited herein. The configuration information is carried in the RRC signaling (for example, the RRC reconfiguration message), the MAC CE, or the PDCCH.

In the embodiments of the present disclosure, for one or more secondary cells, the network device may additionally indicate execution time of activation and/or deactivation of the secondary cell in the configuration information.

The arrangement way of the execution time is not limited herein. In some embodiments, the execution time may include at least one of the following: the UTC, the timeout moment of the timer corresponding to the secondary cell, and the system frame number.

The timer corresponding to the secondary cell is started when the terminal device receives the configuration information, and stopped when the timeout moment in the configuration information is reached. The system frame number is the one received on the primary cell or received on the special secondary cell.

At block S402, the terminal device activates the secondary cell or deactivates the secondary cell according to the execution time in the configuration information.

In some embodiments, if the secondary cell to be activated is configured with the relevant execution time, and the execution time of the secondary cell to be activated is met in the terminal device, the terminal device activates the secondary cell. The activating the secondary cell includes at least one of the following: monitoring the PDCCH on the secondary cell, transmitting the channel detection reference signal, the physical uplink shared channel, or the physical uplink control channel on the secondary cell, and performing the channel state information measurement and the beam management on the secondary cell.

In some embodiments, if the secondary cell to be deactivated is configured with the relevant execution time, and the execution time of the secondary cell to be deactivated is met in the terminal device, the terminal device deactivates the secondary cell. The deactivating the secondary cell may include at least one of the following: stopping monitoring the PDCCH on the secondary cell, stopping transmitting the channel detection reference signal, the physical uplink shared channel, or the physical uplink control channel on the secondary cell, and stopping performing the channel state information measurement and the beam management on the secondary cell.

How the execution time is met in the terminal device is not limited herein. In some embodiments, if the execution time is the UTC, the terminal device may activate the secondary cell or deactivate the secondary cell when the UTC is reached. In some embodiments, if the execution time is the timeout moment of the timer corresponding to the secondary cell, the secondary cell is activated or deactivated when the timer corresponding to the secondary cell times out. In some embodiments, if the execution time is the system frame number, the terminal device performs the first operation when the received system frame number is equal to the system frame number in the configuration information.

The timer corresponding to the secondary cell is started when the terminal device receives the configuration information, and stopped when the timeout moment in the configuration information is reached. The system frame number is the one received on the primary cell or received on a special secondary cell.

In the embodiments of the present disclosure, when the aggregated secondary cell is the NTN cell, the feeder link switch may occur on a satellite where the NTN cell is located due to moving out of a current coverage area. FIG. 9 is a schematic diagram of activating the secondary cell or deactivating the secondary cell according to some embodiments of the present disclosure. As shown in FIG. 9, if a new satellite still serves a current area and is connected to a cell of the same terrestrial base station after the feed link switch, then for the terminal device, it means that an interruption time of one cell has passed. Deactivating the secondary cell during the interruption time may ensure terminal energy conservation, and reactivating the secondary cell after the interruption time may quickly enter a data transmission state, thereby ensuring transmission rate. By indicating the execution time in advance, the effective time of activation/deactivation caused by a traditional MAC CE may be reduced, such that the terminal device may enter the active state or the deactivated state at a predetermined time, thereby reducing signaling overhead and shortening delay.

It may be understood by those skilled in the art that all or some of the operations of the method embodiments as described above may be implemented may be achieved by hardware associated with program information. The above-mentioned program may be stored in a computer-readable storage medium. The program may perform the operations of the method embodiments as described above when being executed. The above-mentioned storage medium includes: read-only memory (ROM), random access memory (RAM), disks, or CD-ROMs, and other media that can store program code.

FIG. 10 is a structural schematic diagram of a communication apparatus according to some embodiments of the present disclosure. The communication apparatus may be implemented in whole or in part by software, hardware, or a combination thereof to perform the communication method at the terminal device in the above-mentioned embodiments. As shown in FIG. 10, the communication apparatus 500 includes a receiving module 501 and a processing module 502.

The receiving module 501 is configured to receive the configuration information transmitted by the network device. The configuration information is configured to configure the communication apparatus to perform the first operation on the secondary cell, and the configuration information includes the first time information.

The processing module 502 is configured to perform the first operation based on the first time information.

In some embodiments, the first operation is an operation performed on the secondary cell when the feeder link switch occurs.

In some embodiments, the first time information includes at least one of the following: the UTC, the timeout moment of the timer corresponding to the secondary cell, and the system frame number.

In some embodiments, the processing module 502 is configured to perform the first operation on the secondary cell when the UTC is reached.

In some embodiments, the timer corresponding to the secondary cell is started when the communication apparatus receives the configuration information and stopped when the timeout moment in the configuration information configuration is reached.

In some embodiments, the processing module 502 is used for the communication apparatus to perform the first operation when the timer corresponding to the secondary cell times out.

In some embodiments, the system frame number is the one received on the primary cell or received on a special secondary cell.

In some embodiments, the receiving module 501 is further configured to receive indication information transmitted by the network device. The indication information is configured to indicate that the system frame number is received on the primary cell, or indicate the identifier of the secondary cell receiving the system frame number.

In some embodiments, the processing module 502 is configured to perform the first operation when the received system frame number is equal to the system frame number in the configuration information.

In some embodiments, the first operation includes adding the secondary cell or deleting the secondary cell.

In some embodiments, the first operation includes activating the secondary cell or deactivating the secondary cell.

In some embodiments, the activating the secondary cell includes at least one of the following: monitoring the PDCCH on the secondary cell, transmitting the channel detection reference signal, the physical uplink shared channel, or the physical uplink control channel on the secondary cell, and performing the channel state information measurement and the beam management on the secondary cell.

In some embodiments, the deactivating the secondary cell includes at least one of the following: stopping monitoring the PDCCH on the secondary cell, stopping transmitting the channel detection reference signal, the physical uplink shared channel, or the physical uplink control channel on the secondary cell, and stopping performing the channel state information measurement and the beam management on the secondary cell.

The communication apparatus provided by some embodiments of the present disclosure may perform the actions of the communication method at the terminal device in the in the above-mentioned embodiments, and implementation principle and technical effect thereof are similar, which will not be repeated herein.

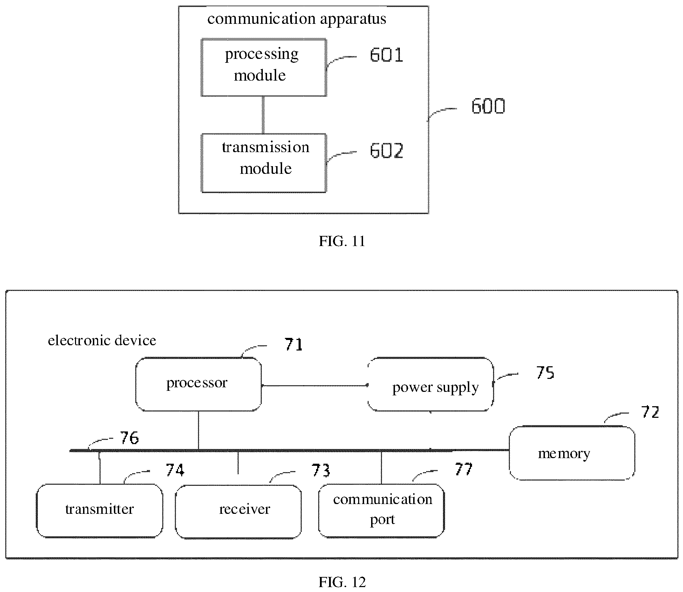

FIG. 11 is a structural schematic diagram of another communication device according to some embodiments of the present disclosure. The communication device may be implemented in whole or in part by software, hardware, or a combination thereof to perform the communication method at the network device in the above-mentioned embodiments. As shown in FIG. 11, the communication device 600 includes a processing module 601 and a transmission module 602.

The processing module 601 is configured to determine the configuration information, the configuration information includes the first time information, and the first time is a time for which the terminal device performs the first operation on the secondary cell.

The transmission module 602 is configured to transmit the configuration information to the terminal device.

In some embodiments, the first operation is an operation performed on the secondary cell when feeder link switch occurs.

In some embodiments, the first time information includes at least one of the following: the UTC, the timeout moment of the timer corresponding to the secondary cell, and the system frame number.

In some embodiments, the timer corresponding to the secondary cell is started when the terminal device receives the configuration information, and stopped when the timeout moment in the configuration information is reached.

In some embodiments, the system frame number is one received on the primary cell or received on the special secondary cell.

In some embodiments, the transmission module 602 is further configured to transmit indication information to the terminal device. The indication information is configured to indicate that the system frame number is received on the primary cell, or indicate the identifier of the secondary cell receiving the system frame number.

In some embodiments, the first operation includes adding the secondary cell or deleting the secondary cell.

In some embodiments, the first operation includes activating the secondary cell or deactivating the secondary cell.

In some embodiments, the activating the secondary cell includes at least one of the following: monitoring the PDCCH on the secondary cell, transmitting the channel detection reference signal, the physical uplink shared channel, or the physical uplink control channel on the secondary cell, and performing the channel state information measurement and the beam management on the secondary cell.

In some embodiments, the deactivating the secondary cell includes at least one of the following: stopping monitoring the PDCCH on the secondary cell, stopping transmitting the channel detection reference signal, the physical uplink shared channel, or the physical uplink control channel on the secondary cell, and stopping performing the channel state information measurement and the beam management on the secondary cell.

The communication device provided by some embodiments of the present disclosure may perform the actions of the communication method at the network device in the in the above-mentioned embodiments, and implementation principle and technical effect thereof are similar, which will not be repeated herein.

FIG. 12 is a structural schematic diagram of an electronic device according to some embodiments of the present disclosure. As shown in FIG. 12, the electronic device may include a processor 71 (such as a CPU), a memory 72, a receiver 73, and a transmitter 74. The receiver 73 and the transmitter 74 are coupled to the processor 71, and the processor 71 controls a receiving action of the receiver 73 and a transmitting action of the transmitter 74. The memory 72 may include a high-speed RAM memory or a non-volatile memory NVM, such as at least one disk memory. The memory 72 may store various information for completing various processing functions and realizing steps of the methods of the embodiments of the present disclosure. In some embodiments, the electronic device related to the embodiment of the present disclosure may also include a power supply 75, a communication bus 76, and a communication port 77. The receiver 73 and the transmitter 74 may be integrated in the transceiver of the electronic device, or may be independent transceiver antennas arranged on the electronic device. The communication bus 76 is configured to implement communication connections between components. The above-mentioned communication port 77 is configured to implement connecting and communicating between the electronic device and other peripherals.

In the embodiments of the present disclosure, the above-mentioned memory 72 is configured to store executable program code including information. When the processor 71 performs the information, the information causes the processor 71 to execute the processing actions at the terminal device of the method embodiments as described above, causes the transmitter 74 to execute the transmitting actions at the terminal device of the method embodiments as described above, and causes the receiver 73 to execute the receiving actions at the terminal device of the method embodiments as described above, and the implementation principle and technical effect thereof are similar, which will not be repeated herein.

Alternatively, when the processor 71 performs the information, the information causes the processor 71 to perform the processing actions at the network device of the method embodiments as described above, causes the transmitter 74 to execute the transmitting actions at the network device of the method embodiments as described above, and causes the receiver 73 to execute the receiving actions at the network device of the method embodiments as described above, and the implementation principle and technical effect thereof are similar, which will not be repeated herein.

A communication system may be further provided by some embodiments of the present disclosure. The communication system includes the terminal device and the network device, to perform the above-mentioned communication method.

A chip may be further provided by some embodiments of the present disclosure. The chip includes a processor and an interface. The interface is configured to input and output data or instructions processed by the processor. The processor is configured to perform the methods of the method embodiments as described above. The chip may be applied to the terminal device or the network device.

A computer-readable storage medium may be further provided by some embodiments of the present disclosure. The computer-readable storage medium may include: USB flash drives, removable hard drives, read-only memory (ROM), random access memory (RAM), a magnetic disk or an optical disk, and other media that can store program code. The computer readable storage medium stores program information configured for the above-mentioned communication method.

A program may be further provided by some embodiments of the present disclosure. The program is configured to perform the communication method provided by the above method embodiment when executed by the processor.

A program product, such as a computer-readable storage medium, may be further provided by some embodiments of the present disclosure. An instruction is stored in the program product, and the program product causes a computer to perform the communication method provided by the above method embodiments.

A device may be further provided by some embodiments of the present disclosure. The device may include at least one processor and an interface circuit, and the program instructions involved are executed in the at least one processor, so that the communication device may implement the communication method provided by the above embodiment.

A communication device may be further provided by some embodiments of the present disclosure. The communication device is configured to implement the communication method provided by the above embodiment.

In the above-mentioned embodiments, it may be implemented in whole or in part by software, hardware, firmware or any combination thereof. When implemented by software, it may be implemented in the form of a computer program product in whole or in part. The computer program product includes one or more computer instructions. When a computer program instruction is loaded and implemented on the computer, the flow or function according to the embodiment of the present disclosure is generated in whole or in part. The computer may be a general-purpose computer, a special purpose computer, a computer network, or other programmable device. The computer instruction may be stored in a computer-readable storage medium, or transferred from one computer-readable storage medium to another computer-readable storage medium. For example, the computer instruction may be transferred from a website, a computer, a server or a data center to another website, computer, server or data center through wired (such as a coaxial cable, an optical fiber, a digital subscriber line (DSL)) or wireless (such as infrared, wireless, microwave, etc.). The computer-readable storage medium may be any available medium that may be accessed by the computer or is a data storage device including a server integrated with one or more available medias, a data center, etc. The available media may be a magnetic media (for example, floppy disk, hard disk, magnetic tape), an optical media (for example, DVD), or a semiconductor media (for example, solid state disk, SSD), etc.

Finally, it should be noted that the above embodiments are only used to illustrate the technical solutions of the embodiments of the present disclosure, but is not intended to limit the present disclosure. Although the present disclosure has been described in detail with reference to the above-mentioned embodiments, it should be understood that those skilled in the art may still modify the technical solutions described in the above-mentioned embodiments, or replace equivalently some or all of the technical features. These modifications or equivalent replacement do not make the essence of the corresponding technical solutions separate from the scope of the technical solutions of various embodiments of the present disclosure.

## Claims

1. A communication method, comprising:
receiving, by a terminal device, configuration information transmitted by a network device, wherein the configuration information comprises first time information;
performing, by the terminal device, a first operation according to the first time information.

2. The method as claimed in claim 1, wherein the first operation is an operation performed on a secondary cell in response to feeder link switch occurring.

3. The method as claimed in claim 1 or 2, wherein the first time information comprises at least one of: a Coordinated Universal Time, a timeout moment of the timer corresponding to the secondary cell, and a system frame number.

4. The method as claimed in claim 3, wherein the performing, by the terminal device, a first operation according to the first time information, comprises:
performing, by the terminal device, the first operation on the secondary cell in response to the Coordinated Universal Time being reached.

5. The method as claimed in claim 3, wherein the timer corresponding to the secondary cell is started in response to the terminal device receiving the configuration information, and stopped in response to the timeout moment in the configuration information being reached.

6. The method as claimed in claim 3 or 5, wherein the performing, by the terminal device, a first operation according to the first time information, comprises:
performing, by the terminal device, the first operation in response to the timer corresponding to the secondary cell timing out.

7. The method as claimed in claim 3, wherein the system frame number is one received on a primary cell or received on a special secondary cell.

8. The method as claimed in claim 7, further comprising:
receiving, by the terminal device, indication information transmitted by the network device, wherein the indication information is configured to indicate that the system frame number is received on the primary cell, or indicate an identifier of the secondary cell receiving the system frame number.

9. The method as claimed in claim 3 or 7, wherein the performing, by the terminal device, a first operation according to the first time information, comprises:
performing, by the terminal device, the first operation in response to a received system frame number being equal to the system frame number in the configuration information.

10. The method as claimed in claim 1 or 2, wherein the first operation comprises adding the secondary cell or deleting the secondary cell.

11. The method as claimed in claim 1 or 2, wherein the first operation comprises activating the secondary cell or deactivating the secondary cell.

12. The method as claimed in claim 11, wherein the activating the secondary cell comprises at least one of:
monitoring a physical downlink control channel on the secondary cell,
transmitting a channel detection reference signal, a physical uplink shared channel, or a physical uplink control channel on the secondary cell, and
performing a channel state information measurement and a beam management on the secondary cell.

13. The method as claimed in claim 11, wherein the deactivating the secondary cell comprises at least one of:
stopping monitoring a physical downlink control channel on the secondary cell,
stopping transmitting a channel detection reference signal, a physical uplink shared channel, or a physical uplink control channel on the secondary cell, and
stopping performing a channel state information measurement and a beam management on the secondary cell.

14. A communication method, comprising:
determining, by a network device, configuration information, wherein the configuration information comprises first time information for which a terminal device performs a first operation on a secondary cell;
transmitting, by the network device, the configuration information to the terminal device.

15. The method as claimed in claim 14, wherein the first operation is an operation performed on the secondary cell in response to feeder link switch occurring.

16. The method as claimed in claim 14 or 15, wherein the first time information comprises at least one of: a Coordinated Universal Time, a timeout moment of the timer corresponding to the secondary cell, and a system frame number.

17. The method as claimed in claim 16, wherein the timer corresponding to the secondary cell is started in response to the terminal device receiving the configuration information, and stopped in response to the timeout moment in the configuration information being reached.

18. The method as claimed in claim 16, wherein the system frame number is one received on a primary cell or received on a special secondary cell.

19. The method as claimed in claim 18, further comprising:
transmitting, by the network device, indication information to the terminal device, wherein the indication information is configured to indicate that the system frame number is received on the primary cell, or indicate an identifier of the secondary cell receiving the system frame number.

20. The method as claimed in claim 14 or 15, wherein the first operation comprises adding the secondary cell or deleting the secondary cell.

21. The method as claimed in claim 14 or 15, wherein the first operation comprises activating the secondary cell or deactivating the secondary cell.

22. The method as claimed in claim 21, wherein the activating the secondary cell comprises at least one of:
monitoring a physical downlink control channel on the secondary cell,
transmitting a channel detection reference signal, a physical uplink shared channel, or a physical uplink control channel on the secondary cell, and
performing a channel state information measurement and a beam management on the secondary cell.

23. The method as claimed in claim 21, wherein the deactivating the secondary cell comprises at least one of:
stopping monitoring a physical downlink control channel on the secondary cell,
stopping transmitting a channel detection reference signal, a physical uplink shared channel, or a physical uplink control channel on the secondary cell, and
stopping performing a channel state information measurement and a beam management on the secondary cell.

24. A communication apparatus, comprising:
a receiving module, configured to receive configuration information transmitted by a network apparatus, wherein the configuration information comprises first time information;
a processing module, configured to perform a first operation according to the first time information.

25. The apparatus as claimed in claim 24, wherein the first operation is an operation performed on the secondary cell in response to feeder link switch occurring.

26. The apparatus as claimed in claim 24 or 25, wherein the first time information comprises at least one of: a Coordinated Universal Time, a timeout moment of the timer corresponding to the secondary cell, and a system frame number.

27. The apparatus as claimed in claim 26, wherein the processing module is configured to perform the first operation on the secondary cell in response to the Coordinated Universal Time being reached.

28. The apparatus as claimed in claim 26, wherein the timer corresponding to the secondary cell is started in response to the terminal apparatus receiving the configuration information, and stopped in response to the timeout moment in the configuration information being reached.

29. The apparatus as claimed in claim 26 or 28, wherein the processing module is configured to perform the first operation in response to the timer corresponding to the secondary cell timing out.

30. The apparatus as claimed in claim 26, wherein the system frame number is one received on a primary cell or received on a special secondary cell.

31. The apparatus as claimed in claim 30, wherein the receiving module is further configured to receive the indication information transmitted by the network device, and the indication information is configured to indicate that the system frame number is received on the primary cell, or indicate an identifier of the secondary cell receiving the system frame number.

32. The apparatus as claimed in claim 26 or 30, wherein the processing module is configured to perform the first operation in response to a received system frame number being equal to the system frame number in the configuration information.

33. The apparatus as claimed in claim 24 or 25, wherein the first operation comprises adding the secondary cell or deleting the secondary cell.

34. The apparatus as claimed in claims 24 or 25, wherein the first operation comprises activating the secondary cell or deactivating the secondary cell.

35. The apparatus as claimed in claim 34, wherein the activating the secondary cell comprises at least one of:
monitoring a physical downlink control channel on the secondary cell,
transmitting a channel detection reference signal, a physical uplink shared channel, or a physical uplink control channel on the secondary cell, and
performing a channel state information measurement and a beam management on the secondary cell.

36. The apparatus as claimed in claim 34, wherein the deactivating the secondary cell comprises at least one of:
stopping monitoring a physical downlink control channel on the secondary cell,
stopping transmitting a channel detection reference signal, a physical uplink shared channel, or a physical uplink control channel on the secondary cell, and
stopping performing a channel state information measurement and a beam management on the secondary cell.

37. A communication apparatus, comprising:
a processing module, configured to determine configuration information, wherein the configuration information comprises first time information, and a first time is a time for which a terminal device performs the first operation on a secondary cell;
a transmission module, configured to transmit the configuration information to the terminal device.

38. The apparatus as claimed in claim 37, wherein the first operation is an operation performed on the secondary cell in response to feeder link switch occurring.

39. The apparatus as claimed in claim 37 or 38, wherein the first time information comprises at least one of: a Coordinated Universal Time, a timeout moment of the timer corresponding to the secondary cell, and a system frame number.

40. The apparatus as claimed in claim 39, wherein the timer corresponding to the secondary cell is started in response to the terminal device receiving the configuration information, and stopped in response to the timeout moment in the configuration information being reached.

41. The apparatus as claimed in claim 39, wherein the system frame number is one received on a primary cell or received on a special secondary cell.

42. The apparatus as claimed in claim 41, wherein the transmission module is further configured to transmit indication information to the terminal device, and the indication information is configured to indicate that the system frame number is received on the primary cell, or indicate an identifier of the secondary cell receiving the system frame number.

43. The apparatus as claimed in claim 37 or 38, wherein the first operation comprises adding the secondary cell or deleting the secondary cell.

44. The apparatus as claimed in claim 37 or 38, wherein the first operation comprises activating the secondary cell or deactivating the secondary cell.

45. The apparatus as claimed in claim 44, wherein the activating the secondary cell comprises at least one of:
monitoring a physical downlink control channel on the secondary cell,
transmitting a channel detection reference signal, a physical uplink shared channel, or a physical uplink control channel on the secondary cell, and
performing a channel state information measurement and a beam management on the secondary cell.

46. The apparatus as claimed in claim 44, wherein the deactivating the secondary cell comprises at least one of:
stopping monitoring a physical downlink control channel on the secondary cell,
stopping transmitting a channel detection reference signal, a physical uplink shared channel, or a physical uplink control channel on the secondary cell, and
stopping performing a channel state information measurement and a beam management on the secondary cell.

47. A terminal device, comprising a processor and a memory;
wherein the memory is configured to store an executable instruction of the processor, and
the processor is configured to perform the method according to any one of claims 1-13 by executing the executable instruction.

48. A network device, comprising a memory and a processor;
wherein the memory is configured to store an executable instruction of the processor, and
the processor is configured to perform the method according to any one of claims 14-23 by executing the executable instruction.

49. A chip, comprising a processor and a memory;
the processor is configured to call and run a computer program for causing a device arranged with the chip to perform the method according to any one of claims 1-23.

50. A computer-readable storage medium, configured to store a computer program; wherein the computer program is capable of causing a computer to perform the method according to any one of claims 1-23.

51. A computer program product, comprising involved program instructions; wherein the involved program instructions are executed to perform the method according to any one as claimed in claims 1-23.

52. A computer program, causing a computer to perform the method according to any one of claims 1-23.

53. A device, comprising at least one processor and an interface circuit, wherein involved program instructions are executed in the at least one processor, so as to cause a communication device to perform the method according to any one of claims 1-23.

54. A communication system, comprising a communication apparatus according to any one of claims 24-36 and a communication apparatus according to any one of claims 37-46.

55. A communication device, configured to perform the method according to any one of claims 1-23.
